# EUROPEAN PATENT SPECIFICATION

(11) **EP 0 672 340 B1**
(45) Date of publication and mention of the grant of the patent: **05.04.2000**
(21) Application number: 95200577.5
(22) Date of filing: 09.03.1995
(51) Int. Cl.: A01F 15/14

(54) **Round bale wrapping apparatus and method**
Vorrichtung und Verfahren zur Rundballeneinwicklung
Dispositif et méthode pour emballer des ballots ronds

(30) Priority: 14.03.1994 US 212526; 14.03.1994 US 212530; 14.03.1994 US 212532
(43) Date of publication of application: 20.09.1995
(73) Proprietor: NEW HOLLAND BELGIUM N.V., B-8210 Zedelgem (BE)
(72) Inventor: Campbell, Willis R., Olathe, Kansas 66062 (US); Seymour, Shaun A., New Holland, Pennsylvania 17557 (US)
(74) Representative: Vandenbroucke, Alberic

(56) References cited:
- EP-A- 0 290 180
- EP-A- 0 535 532
- FR-A- 2 549 691
- FR-A- 2 687 040
- GB-A- 1 218 648
- US-A- 3 914 926
- US-A- 4 167 844
- US-A- 4 366 665
- US-A- 4 597 254
- US-A- 4 768 431
- US-A- 5 365 836

## Description

The present invention relates generally to an apparatus and method in agricultural machines for wrapping cylindrical packages of crop material. More particularly it is related to an apparatus and a method for wrapping round bales with strips of self adhering material.

Round balers commonly have either a fixed or an expandable bale forming chamber between opposing vertical sidewalls. The chamber in many instances is defined by a floor and a transverse wall which comprises a continuous apron and/or a plurality of rolls. Frequently the apron consists of an array of side-by-side belts trained around a series of rollers extending between the sidewalls and the floor consists of a roller or a continuous belt. During field operation, crop material such as hay is picked up from the ground and fed into the expandable chamber. The volume of crop material increases continuously in the chamber to form a cylindrical package which is then wrapped to form a completed bale which is subsequently ejected onto the ground.

Balers of the type mentioned above employ various means for wrapping the package of crop material formed in the chamber. Prior art apparatus commonly utilize either twine or net to secure the package into a bale. Plastic sheet material has also been used.

Exemplary of known apparatus in which net wrapping is employed is the round baler shown in US-A-4.768.431. A prior art round baler using plastic as the wrapping medium is disclosed in US-A-4.366.665. Such wrapping apparatus requires a considerable amount of wrapping material as the full periphery of the bale is covered with the wrapping material.

Typical prior art apparatus in which twine wrapping is utilized is illustrated by US-A-4.167.844. In this type of apparatus it takes a considerable lot of time to wrap the twine several times around the bale in order to obtain a stable bale. During this interval no further crop material can be fed to the baling chamber, such that the baler has to be halted on the field during an important portion of the baling operations.

Another twine wrapping apparatus is disclosed by EP-A-0.535.532. This apparatus presents the same drawback as the other twine wrapping apparatus: it requires a considerable time to wrap the bale with the twine. Furthermore, the twine wrapping cycle is extended for applying an adhesive strip over an edge of the bale for securing the twine to the bale. The strip prevents that the end of the twine gets detached from the bale, but does not remedy to the cycle time problem. Moreover, the supply of strip material is remote from the baling chamber and the self-adhesive strips are fed to the baling chamber by means of a pair of feed rollers and a stationary guide plate. Such embodiment is not very reliable because the fed strips easily deviate and get stuck to a portion of the baler before they reach the periphery of the bale.

Therefore it is an object of the present invention to provide an effective and reliable bale wrapping apparatus and method which require less wrapping material than the net and plastic wrap systems and do not demand the high number of rotations of the cylindrical crop package as required in the twine wrapping systems.

According to one aspect of the invention, a baler for forming cylindrical bales of crop material is provided, said baler comprising:
bale forming means cooperating with each other to define a bale forming chamber;
means for feeding crop material into said bale forming chamber to form a cylindrical package of crop material; and bale wrapping means for wrapping said cylindrical package of crop material to form a bale, said bale wrapping means comprising a tape supply assembly and a tape dispensing assembly;
said tape supply assembly comprising a plurality of rolls of tape; and
said tape dispensing assembly comprising a like plurality of tape dispensers arranged for dispensing a plurality of spaced strips of tape from said rolls into said bale forming chamber along a plurality of predetermined, separate paths around the periphery of said cylindrical package of crop material to form a stable bale.

The baler is characterized in that said baler further comprises:
mounting means for mounting said tape dispensing assembly in a home position; and
means for moving said dispensing assembly from said home position to an operative position at which said tape dispensing assembly reduces the length of the portion of said path of the tape that extends between said dispensers and the periphery of said cylindrical package.

Preferably the tape is self adhering. It may be dispensed through a space between the frame and the tailgate and the wrapping mechanism may be mounted on the latter. Preferably each tape dispenser receives tape from a particular tape roll and feeds this tape along predetermined paths which lie in separate planes that are normal to the bale axis. Advantageously, the mounting means can be moved from a home position to an operative position closer to the hay package and therefrom to a cutting position in which the tapes engage cutting means for concurrently severing said tapes.

The tape dispensers may comprise means for urging the tape to two jointly driven sets of discs. Preferably these urging means comprise a wheel which holds the tape in engagement with both sets of discs and urges said tape into a space between two neighbouring side-by-side discs. The sets of discs may be driven via one-way clutches to dispense tape at a speed, which is lower than the surface speed of the hay package.

According to another aspect of the present invention a method is provided of forming a cylindrical bale of crop material having a generally round cross section, said method comprising the steps of:
- picking up crop material;
- feeding said picked up crop material into a bale forming chamber which is at least partially defined by bale forming means;
- forming said crop material in said bale forming chamber into a cylindrical package having a generally round cross section; and
- wrapping said cylindrical package of crop material with a plurality of spaced strips of self adhering tape from a tape dispensing assembly, which comprises a plurality of tape dispensers, along a plurality of separate paths around the outer periphery thereof to encompass said package and form a stable bale;
characterized in that said wrapping step comprises the substep of:
moving said tape dispensing assembly from a home position to an operative position at which said tape dispensing assembly reduces the length of the portion of said path of the tape that extends between said dispensers and the periphery of said cylindrical package.

According to yet another aspect of the present invention a bale is provided which comprises a package of fibrous crop material with a substantially cylindrical periphery and which is characterized in that said package is wrapped around said periphery and along a plurality of separate paths with a plurality of strips of self-adhering tape.

A baler in accordance with the present invention will now be described in greater detail, by way of example, with reference to the accompanying drawings, in which:
Figure 1 is a diagrammatic side elevational view of a round baler in which the present invention is embodied;
Figure 2 shows in further detail a particular part of the side elevational view of the round baler shown in Figure 1;
Figure 3 is a view taken in the direction of arrows 3-3 in Figure 2;
Figure 4 is a view taken in the direction of arrows 4-4 in Figure 3;
Figure 5 is a partial side elevational view of the bale wrapping mechanism shown on the baler in Figure 1;
Figure 6 is a view taken in the direction of arrows 6-6 in Figure 3;
Figure 7 is a perspective view of a tape dispenser;
Figure 8 is a view taken in the direction of arrows 8-8 in Figure 7; and
Figure 9 is a perspective view of a round bale formed by a baler in which the present invention is embodied.

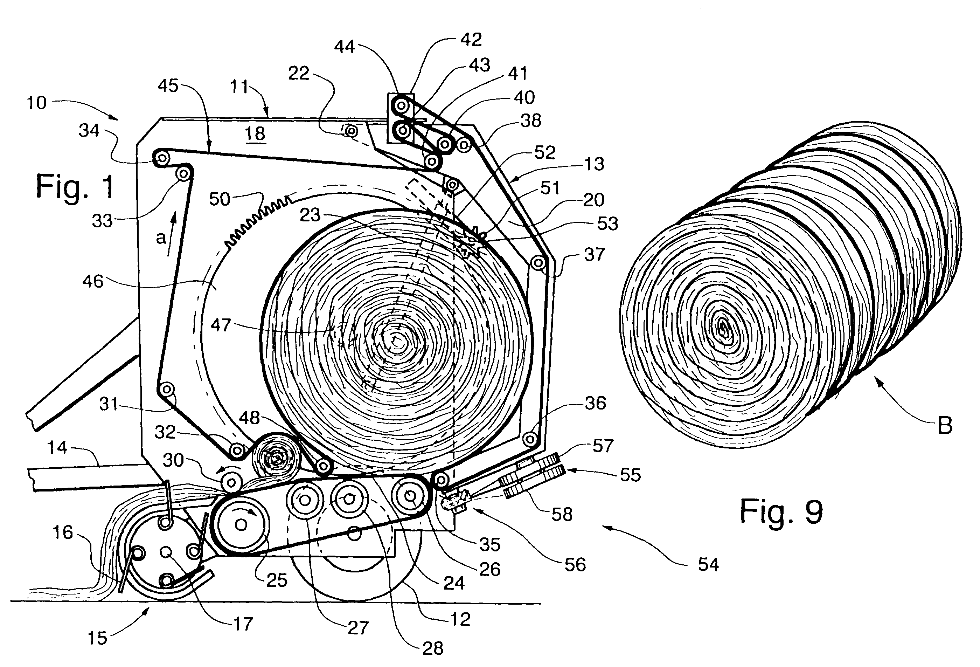

Referring to the drawings, Figure 1 shows a round baler 10 in which the present invention is embodied. Baler 10 has an expandable chamber defined by sidewalls, belts and a floor conveyor, of the type disclosed in US-A-4.597.254, incorporated herein by reference. Some aspects of this baler type are similar to the baler disclosed in US-A-3.914.926, which patent is also incorporated herein by reference.

Round baler 10 includes a main body portion comprising a frame 11, supported by a pair of wheels 12, and an auxiliary body portion comprising a tailgate 13. A tongue 14 is provided on the frame 11 for connection to a tractor. A pick-up device 15 mounted on frame 11 includes a plurality of tines 16 rotatable about a shaft 17 for picking up crop material.

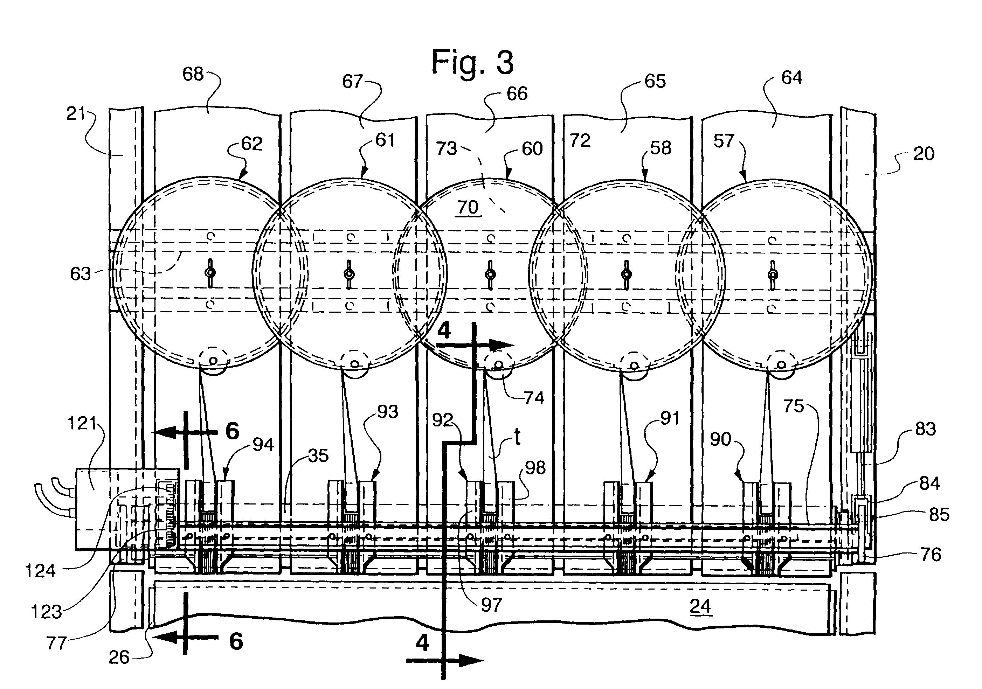

Frame 11 includes a pair spaced vertical sidewalls 18. Tailgate 13 includes a first side member 20 and a second side member 21 (Figure 3) rigidly connected together by cross members (not shown) and pivotally connected by stub shafts 22 to sidewalls 18. A pair of hydraulic cylinders 23 are connected between sidewalls 18 and the side members for moving tailgate 13 between closed (Figure 1) and open positions, the latter of which is shown in the US-A-4.597.254.

Lower bale forming means such as a conveyor 24 in the form of an endless belt extends between sidewalls 18 and is supported on front and rear rollers 25, 26, rotatably mounted on frame 11. The upper run of conveyor 24 is supported between front and rear rollers 25, 26 by intermediate rollers 27, 28, also rotatably mounted on frame 11. A press roller 30 is mounted above front roller 25 to compress incoming crop material. Press roller 30 and front roller 25 are connected by conventional drive means (not shown) to a tractor power take off imparting rotation in the directions indicated in Figure 1, i.e., the upper run of conveyor 24 moves rearwardly.

Now turning to the bale forming apron, a plurality of rollers 31, 32, 33, 34 extend between and are rotatably supported on sidewalls 18. Another plurality of rollers 35, 36, 37, 38, 40, 41 extend between and are rotatably supported on the side members of tailgate 13. Shuttle members 42 are slidably mounted on sidewalls 18 for back and forth movement near the top of frame 11. A pair of rollers 43, 44 extend between and are rotatably carried by shuttle members 42. A series of endless belts 45 extend around the aforementioned rollers in a side-by-side, spaced arrangement between sidewalls 18 and the side members. Selected rollers are connected to the tractor PTO by drive means (not shown) to drive belts 45 in the direction indicated by arrow a. Shuttle members 42 are urged forwardly by spring mechanisms (not shown) to maintain tension in belts 45.

Baler 10 further comprises a pair of disks 46 disposed inside frame 11 closely adjacent and parallel to sidewalls 18. Each disk is in the form of a flat circular plate. Disks 46 are fixed at their centres to stub shafts 47 which in turn are journalled in sidewalls 18. An indexing member 48 in the form of a transverse roller is rotatably connected between disks 46 at a location radially outward from stub shafts 47. Teeth 50 formed on the edges of disks 46 mesh with sprockets 51 rotatably mounted on brackets 52 attached to sidewalls 18. Sprockets 51 are connected by a cross shaft 53, one end of which is coupled to an electric clutch and brake device (not shown) selectively operated as either a clutch to allow shaft 53 and sprockets 51 to be rotated or as a brake to hold shaft 53 and sprockets 51 stationary.

With reference to Figure 1, it will be seen that belts 45 pass underneath indexing member 48 so that a lower span of belts 45 running from indexing member 48 to roller 32 moves in a direction substantially opposite to the direction of the upper run of conveyor 24 causing crop material to be coiled in the manner shown to start a bale before the previously formed package is wrapped. To accomplish this the lower span of belts 45 is expandable in length during bale formation in the manner described in US-A-4.597.254 mentioned above.

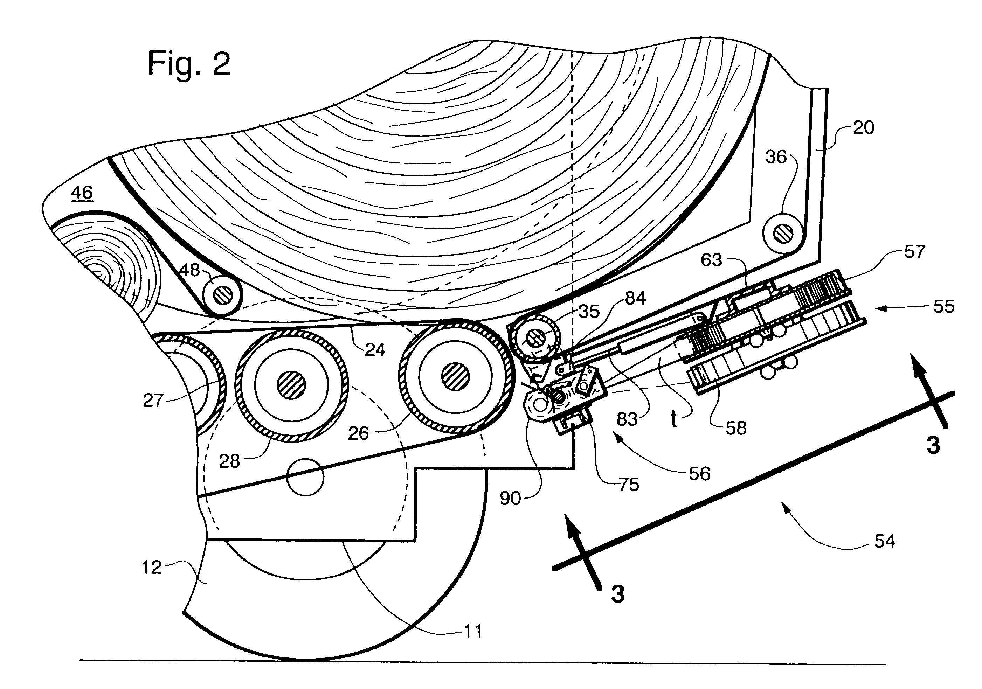

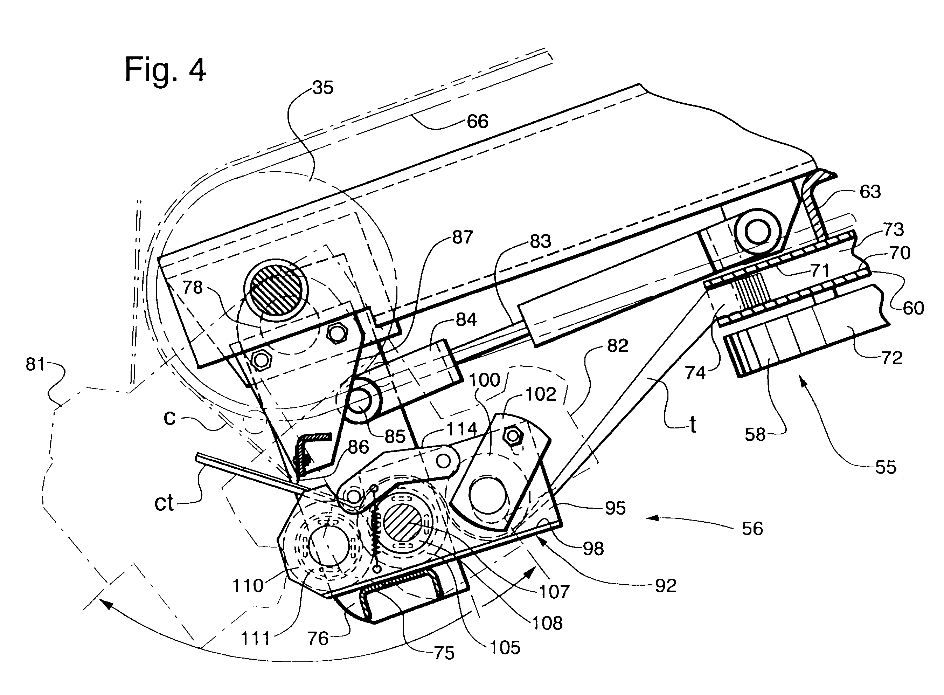

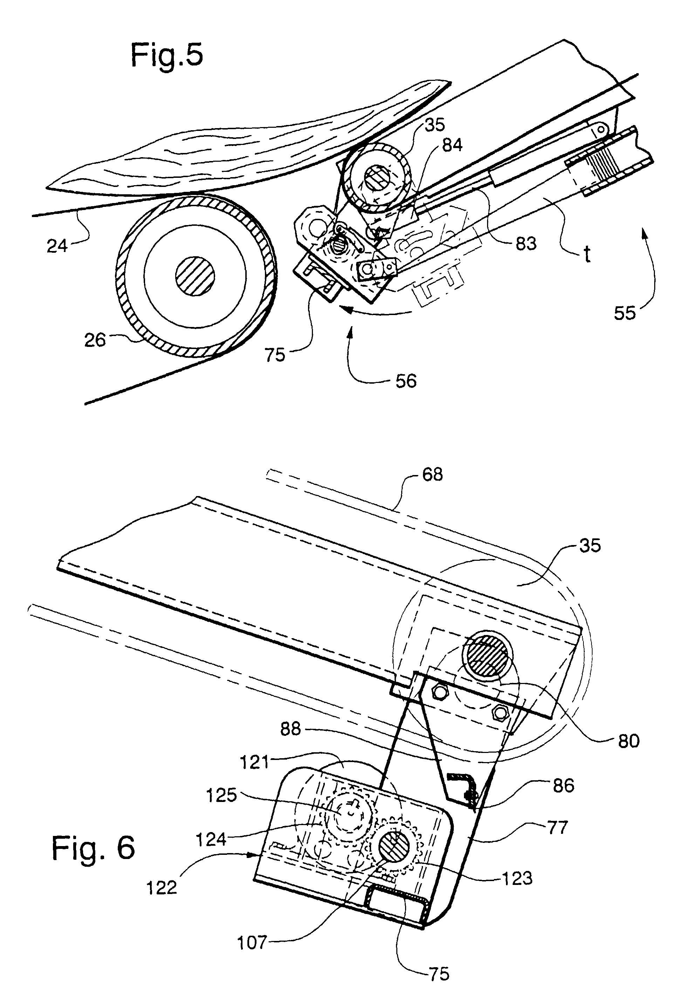

Referring to Figures 1 & 2, a bale wrapping mechanism 54, attached to the lower end of tailgate 13, comprises a tape supply assembly 55 and a tape dispensing assembly 56. Referring now to Figure 3, tape supply assembly 55 includes five tape supply canisters 57, 58, 60, 61, 62, each removably mounted on a crosspiece 63 affixed to side members 20, 21. Each canister is aligned with and adjacent to a corresponding belt 64, 65, 66, 67, 68 of the series of side-by-side endless belts 45. The tape supply canisters each consist of a top wall 70 (using only canister 60 as an example), a bottom wall 71 (see Figure 4) and a cylindrical side wall 72 (canister 58), and are alternately offset as shown in Figure 3. Each canister accommodates a roll of tape 73 (see Figure 4) and a tape issuing reel 74. The tape from each canister issues to a particular one of a plurality of tape dispensers, all of which are mounted on a cross beam 75 extending between first and second opposing side arms 76, 77 mounted to rotate on first and second stub shafts 78, 80, shown in Figures 4 and 6, respectively. The entire dispensing assembly 56, shown in Figure 4 in the rest position, is pivoted about the stub shafts between operative position 81 and cutting position 82, both of which are shown in phantom outline. Pivotal motion is imparted by extension and retraction of an actuator rod 83 which is pivotally mounted to first opposing side arm 76 by a bracket 84 and a journal 85. Figure 5 shows dispensing assembly 56 pivoted into the space between roller 35 and rear roller 26 to its operative position for dispensing tape after tailgate 13 has partially opened to create such space.

A knife 86, extending transverse to the path of the endless belts, is mounted via fixed brackets 87, 88, see Figures 4 & 6, respectively. The tapes from the dispensers are simultaneously cut when dispensing assembly 56 is pivoted to cutting position 82, shown in phantom in Figure 4, thereby pulling the tapes against the cutting edge of knife 86, as discussed below.

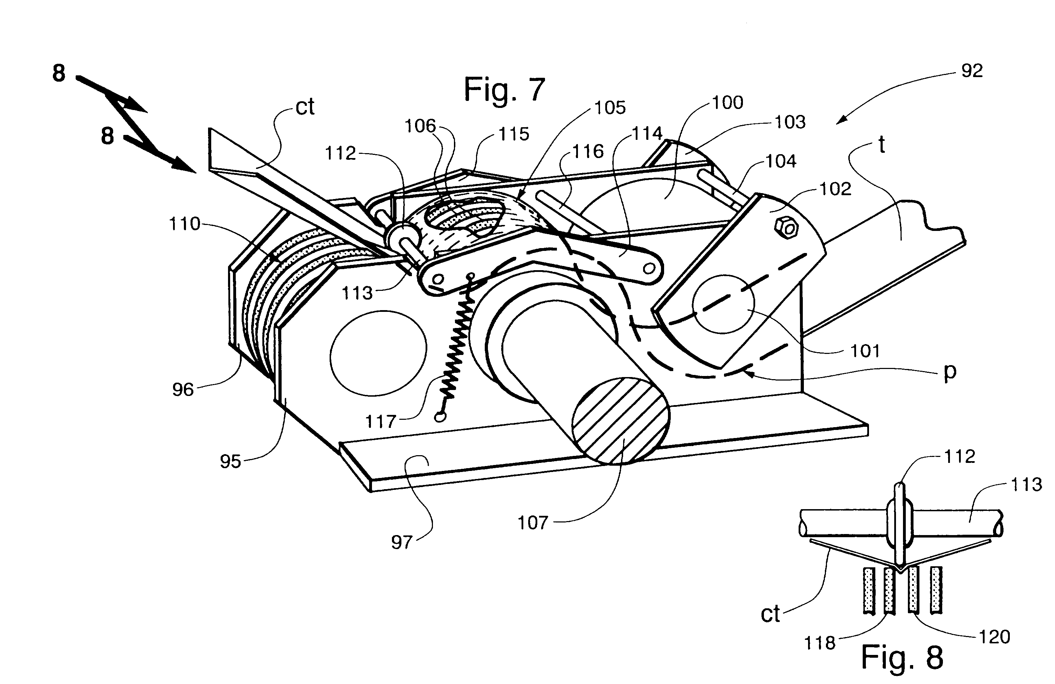

More specifically, tape dispensing assembly 56 comprises a plurality of identical tape dispensers 90, 91, 92, 93, 94, each of which comprises similar elements. For the purposes of this description dispenser 92, shown in Figure 4, is depicted in perspective in Figure 7 to more clearly illustrate its elements. Opposing support members 95, 96 are secured to cross beam 75 by integral flanges 97, 98 (shown in Figure 3). A feed roll 100 is mounted for rotation on a shaft 101 affixed to a pair of legs 102, 103 pivotal about rod 104 extending between opposing support members 95, 96. Also mounted for rotation between opposing support members 95, 96 is a driven disc pack 105 comprising a plurality of side-by-side driven discs 106, having knurled outer surfaces.

Disc pack 105 is coaxially mounted to a drive shaft 107 via a one way sprag clutch assembly 108. A second disc pack 110 mounted between opposing support members 95, 96 comprise a similar plurality of side-by-side knurled discs that intermesh with driven discs 106. Disc pack 110, also coaxially mounted for one way rotation via a sprag clutch 111 (Figure 4), is driven in a conventional manner by gearing (not shown) that couples the shaft that drives disc pack 110 to shaft 107. Disc pack 110 is driven 20 to 30% faster than disc pack 105 for the reason discussed below. Completing dispenser 92 is a crease wheel 112 mounted for rotation on shaft 113 extending between arms 114, 115 that rotate about rod 116. A spring 117 loads crease wheel 112 downwardly against the overlapping nip of the discs of disc pack 105 and second disc pack 110. Wheel 112 is disposed between the two centrally located discs 118, 120 of second disc pack 110. As illustrated in Figure 8, this relationship places a crease in tape ct for the purposes of rigidity as it is being dispensed.

A motor 121 is affixed to cross beam 75 via a mounting bracket assembly 122 (Figure 6) for conjoint movement therewith. Shaft 107 is driven via driven gear 123 intermeshing with a drive gear 124 on the output shaft 125 of the motor.

In operation, baler 10 is towed across a field by a tractor, pick-up 15 delivers crop material between press roller 30 and conveyor 24. The upper run of conveyor 24 carries the crop material rearwardly into a bale starting zone where it is engaged by the lower span of belts 45 which are travelling in a forward direction. This causes coiling of the crop material to form the core of a bale. During this stage the electric clutch and brake device (not shown) is operated as a brake so that disks 46 are held stationary by sprockets 51 and indexing member 48 is located in its home position causing belts 45 to be pinched against the upper run of conveyor 24 to close off the rear of the bale starting zone as shown in Figure 1. As the bale increases in diameter, shuttle members 42 move rearward along the top of frame 11 to the position shown in Figure 1 allowing the lower span of belts 45 to expand around the periphery of the cylindrical package of crop material being formed.

When a package of crop material reaches a predetermined diameter, the electric clutch and brake device is operated as a clutch and sprockets 51 are driven causing rotation of disks 46 in a counter-clockwise direction and movement of indexing member 48 from its home position in a substantially circular path of travel generally about the periphery of the cylindrical package of crop material. Initial rotation of disks 46 moves indexing member 48 out of engagement with belts 45 while crop material continues to be delivered to the forming chamber. When indexing member 48 is continued in its circular path, the cylindrical package will have moved slightly rearward (as described in US-A-4.597.254 mentioned above). At this point, indexing member 48 has been returned to the home position shown in Figure 1. The bale starting zone is now reformed and a new bale can be started during wrapping. Tailgate 13 is moved to the partial open position shown in Figure 5 by incrementally extending hydraulic cylinders 23. Wrapping is initiated subsequent to which a completed bale is discharged from baler 10 and tailgate 13 is moved back to its closed position while the baling operation continues without interruption.

More specifically, the wrapping operation entails supply canisters 58, 60, 61, 62, 63 issuing tape to associated tape dispenser 90, 91, 92, 93, 94, respectively. Tape t follows path p shown in Figure 7, i.e., under feed roll 100, over driven disc pack 105 and out between second disc pack 110 and crease wheel 112. The adhesive side of the tape is facing outwardly relative to roll 100 and facing inwardly with respect to disc packs 105 and 110, i.e., engaging the knurled edges thereof. To avoid unwanted adherence of the tape to the discs of disc pack 110 the rotational speed of disc pack 110 is 20 to 30% greater than the speed of the tape as it is being moved along path p by the discs in disc pack 105.

Initially the end of the tape, designated ct, is creased and poised in the rigid position shown in Figures 7 and 4 during the time that crop material is being formed into a cylindrical package in the chamber. Wrapping is initiated by rotating dispensing assembly 56 to the position shown in Figure 5, whereupon motor 121 imparts rotation to shaft 107 which in turn rotates disc packs 105 and 110 at the different speeds mentioned, via associated sprag clutch assemblies, causing the ends of the tapes to pay out until they engage the surface of the hay package as it is rotated in the chamber at a surface speed slightly faster than the rate at which tape is dispensed. The adhesive side of the tape engages the moving hay surface which drags the rigid end of the tape to the nip of the cylindrical crop surface and the belts as they travel around roller 35, as illustrated in Figure 5. The sprag clutches are designed to allow the tapes to be dispensed at the surface speed of the crop material. The tape continues to feed out of the dispensers until the ends overlap with the tape being dispensed. At a desired time after a preselected amount of overlapping tape has been dispensed, the dispensing assembly is rotated to cutting position 82, shown in phantom in Figure 4, which causes the tape path to change to path c shown in phantom in Figure 4. This brings the cutting edge of knife 86 into contact with the tapes, which are simultaneously severed. The motor continues to drive all dispensers and feed the tapes until the severed ends reach the wrap initiate position shown in Figure 7. The tape dispensers are returned to the home position (shown in solid lines in Figure 4) by actuator rod 83 as tail gate 13 is opened to discharge the bale B wrapped by a plurality of tapes as shown in Figure 9. The tailgate is then repositioned to the condition shown in Figures 1 and 2 with the gap closed between rear roller 26 and roller 45. At this point, bale wrapping mechanism 54 is again poised to initiate wrapping.

Among the many explicit and implicit advantages of the present invention is the ability of the dispensing assembly to dispense tape along a plurality of paths and simultaneously cut the tapes without the need for synchronizing the initiation of pay out of the tapes. This is particularly important in view of the imprecise nature of the surface of the cylindrical package of crop material that is commonly encountered, which causes the various tapes to actually engage the bale in a random fashion and therefore the tapes reach the nip at different times. The present invention accommodates varying amounts of individual pay out and therefor provides effective and reliable tape wrapping along multiple paths.

While preferred structure in which the principles of the present invention have been incorporated is shown, it is to be understood that the invention is not limited to such structure, but that, in fact, widely different means of varying scope and configuration may be employed in the practice of the invention. For example, one may consider to use other types of self adhering material, such as Velcro.

## Claims

1. A baler for forming cylindrical bales of crop material, said baler (10) comprising:
bale forming means (24, 45), cooperating with each other to define a bale forming chamber;
means (15, 25, 30) for feeding crop material into said bale forming chamber to form a cylindrical package of crop material; and
bale wrapping means (54) for wrapping said cylindrical package of crop material to form a bale (B), said bale wrapping means (54) comprising a tape supply assembly (55) and a tape dispensing assembly (56);
said tape supply assembly (55) comprising a plurality of rolls (73) of tape (t); and
said tape dispensing assembly (56) comprising a like plurality of tape dispensers (90-94) arranged for dispensing a plurality of spaced strips of tape (t) from said rolls (73) into said bale forming chamber along a plurality of predetermined, separate paths around the periphery of said cylindrical package of crop material to form a stable bale (B);
characterized in that said baler further comprises:
mounting means (75-80) for mounting said tape dispensing assembly (56) in a home position; and
means (83-85) for moving said dispensing assembly (56) from said home position to an operative position (81) at which said tape dispensing assembly (56) reduces the length of the portion of said path of the tape (t) that extends between said dispensers (90-94) and the periphery of said cylindrical package.

2. A baler according to claim 1, wherein:
said bale forming means (24, 45) comprise a lower bale forming means (24) and an upper bale forming means (45);
and which further comprises:
a main frame (11) on which said lower bale forming means (24) is mounted;
a tailgate (13) pivotally mounted on said main frame, said upper bale forming means (45) mounted partly on said main frame (11) and partly on said tailgate (13); and
means (23) for moving said tailgate (13) to provide a space between said frame (11) and said tailgate (13),
characterized in that said tape (t) is dispensed from said dispensers (90-94) through said space between said frame (11) and said tailgate (13).

3. A baler according to claim 2, characterized in that said space is delimited by said lower bale forming means (24) and said upper bale forming means (45).

4. A baler according to claim 2 or 3, characterized in that said bale wrapping mechanism (54) is mounted on said tailgate (13).

5. A baler according to any of the preceding claims, characterized in that each of said tape dispensers (90-94) receives tape (t) from a particular one of said rolls (73) of tape (t).

6. A baler according to any of the preceding claims, characterized in that said tape (t) is self adhering.

7. A baler according to claim 6, characterized in that one side of said tape (t) is provided with an adhesive medium and said tape (t) is dispensed from said dispensers (90-94) with said one side generally parallel to the periphery of said cylindrical package.

8. A baler according to claim 7, characterized in that said predetermined, separate paths around the periphery of said cylindrical package are substantially parallel to each other and in separate planes that are normal to the axis of the cylindrical package, which enables said tape (t) to adhere to itself after having encompassed the entire circumference of said cylindrical package.

9. A baler according to any of the preceding claims, characterized in that said tape dispensing assembly (56) comprises a plurality of equally spaced tape dispensers (90-94) for dispensing a plurality of strips of tape (t) along a plurality of equally spaced paths around the periphery of said cylindrical package of crop material.

10. A baler according to any of the preceding claims, characterized in that said wrapping mechanism (54) further comprises cutting means (86) for simultaneously cutting said plurality of strips of tape (t) after having been dispensed around more than one complete traversal of said periphery of said cylindrical package.

11. A baler according to claim 10, characterized in that said means (83-85) for moving said mounting means (75-80) also moves said dispensing assembly (56) from said operative position (81) to a cutting position (82) in which said tapes (t) engage said cutting means (86) to sever said tapes (t).

12. A baler according to any of the preceding claims, characterized in that said tape dispensers (90-94) comprise:
a drive shaft (107);
a driven disc assembly (105), coaxially mounted to rotate with said drive shaft (107) and comprising a first set of spaced side-by-side discs (106) having outer peripheral edge portions;
means (112-117) for urging said tape (t) against the outer peripheral edge portions of said first sets of discs (106); and
drive means (121) for rotating said drive shaft (107) for feeding said tape (t) between said means for urging (112-117) and the outer peripheral edge portions of said first sets of discs (106), whereby said tape (t) is dispensed from said dispensing assembly (56).

13. A baler according to claim 12, characterized in that said driven disc assembly (105) further comprises a one way clutch (108) operatively mounted on said drive shaft (107), whereby said driven disc assembly (105) is driven by said shaft (107) to move said tape (t) in only one direction.

14. A baler according to claim 12 or 13, characterized in that: said tape dispensers (90-94) further comprise a second disc assembly (110) mounted for rotation about a second shaft parallel to said drive shaft (107), said second disc assembly (110) comprising a second set of spaced side-by-side discs having outer peripheral edge portions;
said urging means (112, 117) also urge said tape (t) against the outer peripheral edge of said second set of discs; and
said first set of driven discs (106) moves said tape along a feed path (p), that conforms generally to the portion of the circumference of the discs (106) in contact with said tape (t).

15. A baler according to claim 14, characterized in that said first set of discs (106) are transversely offset from said second set of discs and said peripheral edges overlap to provide a nip therebetween.

16. A baler according to claim 15, characterized in that said urging means (112-117) comprise:
a transverse shaft (113) disposed in the vicinity of said nip between the first and second set of discs (106);
a wheel (112) journaled on said transverse shaft (113); and
resilient means (117) forcing said shaft (113) toward said nip to engage said wheel (112) with said tape (t).

17. A baler according to claim 16, characterized in that said wheel (112) is transversely disposed adjacent the space between two neighbouring side-by-side discs in said second set of discs.

18. A baler according to any of the claims 14 to 17, characterized in that said discs (106) in said first set are affixed for conjoint rotation, and said discs in said second set are also affixed for conjoint rotation whereby said peripheral edges of said discs move together.

19. A baler according to claim 18, characterized said second disc assembly (110) further comprises a second one way clutch (111) mounted on said shaft coaxial with said second set of spaced side-by-side discs, whereby said second disc assembly (110) is free to rotate in a direction that is conducive to moving said tape (t) along said feed path (p) in said one direction.

20. A baler according to claim 19, characterized in that said drive means (121) rotates said second disc assembly (110) at a rotational speed which is more than 20 % greater than the rotational speed of the driven disc assembly (105).

21. A baler according to any of the claims 12 to 20, characterized in that the surface speed of the package of crop material, induced by the bale forming means (24, 25), is faster than the speed at which said drive means (121) feed said tape (t) into said bale forming chamber.

22. A method of forming a cylindrical bale (B) of crop material having a generally round cross section, said method comprising the steps of:
- picking up crop material;
- feeding said picked up crop material into a bale forming chamber which is at least partially defined by bale forming means (24, 45);
- forming said crop material in said bale forming chamber into a cylindrical package having a generally round cross section; and
- wrapping said cylindrical package of crop material with a plurality of spaced strips of self adhering tape (t) from a tape dispensing assembly (56), which comprises a plurality of tape dispensers (90-94), along a plurality of separate paths around the outer periphery thereof to encompass said package and form a stable bale (B);
characterized in that said wrapping step comprises the substep of:
moving said tape dispensing assembly (56) from a home position to an operative position (81) at which said tape dispensing assembly (56) reduces the length of the portion of said path of the tape (t) that extends between said dispensers (90-94) and the periphery of said cylindrical package.

23. A method according to claim 22, characterized in that said wrapping step comprises the substep of:
- rotating said cylindrical package of crop material about its axis by said bale forming means (24, 45).

24. A method according to claim 23, characterized in that said wrapping step comprises the further substep of:
- providing a space between a pair of initially adjacent bale forming means (24, 25) for enabling the feeding of said strips of tape (t) therethrough.

25. A method according to claim 23 or 24, characterized in that said wrapping step comprises the further substep of:
- feeding said strips of tape (t) to said outer periphery of said rotating cylindrical package.

26. A method according to claim 25, characterized in that said feeding substep is performed at an initial strip feeding speed which is lower than the speed of said outer periphery.

27. A method according to any of the claims 22 to 26, characterized in that said wrapping step comprises the substep of:
- dispensing a plurality of spaced strips of self adhering tape (t) along generally parallel paths around the outer periphery of said cylindrical package.

28. A method according to claim 27, characterized in that said dispensing substep is performed by concurrently dispensing said plurality of strips of self adhering tape (t) along said generally parallel paths.

29. A method according to any of the claims 22 to 28, characterized in that said wrapping step comprises the substep of:
- feeding said strips of tape (t) along individual paths that encompass said package whereupon each of said tapes (t) overlaps itself and adheres to itself.

30. A method according to claim 29, characterized in that said wrapping step comprises the further substep of:
- severing said strips of self adhering tape (t) when the amount of tape dispensed exceeds the circumference of said cylindrical package of crop material.

31. A method according to claim 30, characterized in that said severing substep is performed by concurrently severing said strips of self adhering tape (t).

32. A bale (B), comprising a package of fibrous crop material with a substantially cylindrical periphery, characterized in that a plurality of strips of self-adhering tape (t) is wrapped along separate paths around said periphery.

33. A bale (B) according to claim 32, characterized in that said separate paths are substantially parallel to each other and lie in separate planes which are substantially normal to the axis of the bale (B), such that each strip of tape (t), after having encompassed the entire circumference of said periphery, adheres to itself.

## Patentansprüche

1. Ballenpresse zur Formung zylindrischer Ballen aus Erntematerial, wobei die Ballenpresse (10) folgendes umfaßt:
Ballenformungseinrichtungen (24, 45), die miteinander zusammenwirken, um eine Ballenformungskammer zu bilden,
Einrichtungen (15, 25, 30) zur Zuführung von Erntematerial in die Ballenformungskammer zur Bildung eines zylindrischen Packens aus Erntematerial und
eine Ballenumwicklungseinrichtung (54) zum Umwickeln des zylindrischen Packens aus Erntematerial zur Bildung eines Ballens (B), wobei die Ballenumwicklungseinrichtung (54) eine Bandvorratsbaugruppe (55) und eine Bandabgabebaugruppe (56) umfaßt,
wobei die Bandvorratsbaugruppe (55) eine Vielzahl von Rollen (73) des Bandes (t) umfaßt, und
wobei die Bandabgabebaugruppe (56) eine gleiche Vielzahl von Bandabgabeeinrichtungen (90-94) umfaßt, die zur Abgabe einer Vielzahl von mit Abstand voneinander angeordneten Streifen des Bandes (t) von den Rollen (73) in die Ballenformungskammer entlang einer Vielzahl von vorgegebenen getrennten Bahnen um den Umfang des zylindrischen Packens aus Erntematerial herum zur Bildung eines stabilen Ballens (B) angeordnet sind,
dadurch gekennzeichnet, daß die Ballenpresse weiterhin folgendes umfaßt:
Befestigungseinrichtungen (75-80) zur Befestigung der Bandabgabebaugruppe (56) in einer Ruhestellung, und
Einrichtungen (83-85) zur Bewegung der Abgabebaugruppe (56) von der Ruhestellung auf eine Betriebsstellung (81), in der die Bandabgabebaugruppe (56) die Länge des Teils der Bahn des Bandes (t) verringert, die sich zwischen den Abgabeeinrichtungen (90-94) und dem Umfang des zylindrischen Packens erstreckt.

2. Ballenpresse nach Anspruch 1, bei der:
die Ballenformungseinrichtungen (24, 45) eine untere Ballenformungseinrichtung (24) und eine obere Ballenformungseinrichtung (45) umfassen,
und die weiterhin folgendes umfaßt:
einen Hauptrahmen (11), auf dem die untere Ballenformungseinrichtung (24) befestigt ist,
eine Heckklappe (13), die schwenkbar an dem Hauptrahmen befestigt ist, wobei die obere Ballenformungseinrichtung (45) teilweise auf dem Hauptrahmen (11) und teilweise auf der Heckklappe (13) befestigt ist, und
Einrichtungen (23) zur Bewegung der Heckklappe (13) zur Schaffung eines Abstandes zwischen dem Rahmen (11) und der Heckklappe (13),
dadurch gekennzeichnet, daß das Band (t) von den Abgabeeinrichtungen (90-94) durch den Abstand zwischen dem Rahmen (11) und der Heckklappe (13) abgegeben wird.

3. Ballenpresse nach Anspruch 2, dadurch gekennzeichnet, daß der Abstand durch die untere Ballenformungseinrichtung (24) und die obere Ballenformungseinrichtung (45) begrenzt ist.

4. Ballenpresse nach Anspruch 2 oder 3, dadurch gekennzeichnet, daß der Ballenumwicklungsmechanismus (54) auf der Heckklappe (13) befestigt ist.

5. Ballenpresse nach einem der vorherigen Ansprüche, dadurch gekennzeichnet, daß jede der Bandabgabeeinrichtungen (90-94) Band (t) von einer bestimmten der Rollen (73) des Bandes (t) empfängt.

6. Ballenpresse nach einem der vorherigen Ansprüche, dadurch gekennzeichnet, daß das Band (t) selbsthaftend ist.

7. Ballenpresse nach Anspruch 6, dadurch gekennzeichnet, daß eine Seite des Bandes (t) mit einem Klebemedium versehen ist, und daß das Band (t) von den Abgabeeinrichtungen (90-94) mit dieser einen Seite allgemein parallel zum Umfang des zylindrischen Packens abgegeben wird.

8. Ballenpresse nach Anspruch 7, dadurch gekennzeichnet, daß die vorgegebenen getrennten Bahnen um den Umfang des zylindrischen Packens im wesentlichen parallel zueinander sind und in getrennten Ebenen liegen, die senkrecht zur Achse des zylindrischen Packens stehen, was es dem Band (t) ermöglicht, an sich selbst anzuhaften, nachdem es den gesamten Umfang des zylindri schen Packens umgeben hat.

9. Ballenpresse nach einem der vorigen Ansprüche, dadurch gekennzeichnet, daß die Bandabgabebaugruppe (56) eine Vielzahl von mit gleichen Abständen voneinander angeordneten Bandabgabeeinrichtungen (90-94) zur Abgabe einer Vielzahl von Streifen des Bandes (t) entlang einer Vielzahl von einen gleichen Abstand aufweisenden Bahnen um den Umfang des zylindrischen Packens aus Erntematerial herum umfaßt.

10. Ballenpresse nach einem der vorigen Ansprüche, dadurch gekennzeichnet, daß der Umwicklungsmechanismus (54) weiterhin Schneideinrichtungen (86) zum gleichzeitigen Schneiden der Vielzahl von Streifen des Bandes (t) nach der Abgabe um mehr als einen vollständigen Durchlauf des Umfanges des zylindrischen Packens umfaßt.

11. Ballenpresse nach Anspruch 10, dadurch gekennzeichnet, daß die Einrichtungen (83-85) zur Bewegung der Befestigungseinrichtungen (75-80) weiterhin die Abgabebaugruppe (56) von der Betriebsstellung (81) auf eine Schneidstellung (82) bewegen, in der die Bänder (t) mit den Schneideinrichtungen (86) in Eingriff kommen, um die Bänder (t) zu durchtrennen.

12. Ballenpresse nach einem der vorigen Ansprüche, dadurch gekennzeichnet, daß die Bandabgabeeinrichtungen (90-94) folgendes umfassen:
eine Antriebswelle (107),
eine angetriebene Scheibenbaugruppe (105), die koaxial befestigt ist, um sich mit der Antriebswelle (107) zu drehen, und die einen ersten Satz von mit Abstand voneinander und Seite an Seite angeordneten Scheiben (106) umfaßt, die äußere Umfangskantenteile aufweisen,
Einrichtungen (112-117) zum Anpressen des Bandes (t) gegen die äußeren Umfangskantenteile der ersten Sätze von Scheiben (106), und
Antriebseinrichtungen (121) zum Drehen der Antriebswelle (107) zur Zuführung des Bandes (t) zwischen die Einrichtungen zum Andrücken (112-117) und die äußeren Umfangskantenteile der ersten Sätze von Scheiben (106), wodurch das Band (t) von der Abgabebaugruppe (56) abgegeben wird.

13. Ballenpresse nach Anspruch 12, dadurch gekennzeichnet, daß die angetriebene Scheibenbaugruppe (105) weiterhin eine Freilaufkupplung (108) umfaßt, die betriebsmäßig auf der Antriebswelle (107) befestigt ist, wodurch die angetriebene Scheibenbaugruppe (105) von der Welle (107) so angetrieben wird, daß sie das Band (t) in lediglich einer Richtung bewegt.

14. Ballenpresse nach Anspruch 12 oder 13, dadurch gekennzeichnet, daß die Bandabgabeeinrichtungen (90-94) weiterhin eine zweite Scheibenbaugruppe (110) umfassen, die für eine Drehung um eine zweite Welle parallel zu der Antriebswelle (107) befestigt sind, wobei die zweite Scheibenbaugruppe (110) einen zweiten Satz von mit Abstand voneinander und Seite an Seite angeordneten Scheiben mit äußeren Umfangskantenteilen umfaßt,
wobei die Anpreßeinrichtungen (112, 117) weiterhin das Band (t) gegen die äußere Umfangskante des zweiten Satzes von Scheiben drücken, und
wobei der erste Satz von angetriebenen Scheiben (106) das Band entlang einer Zuführungsbahn (p) bewegt, die allgemein mit dem Teil des Umfanges der Scheiben (106) übereinstimmt, der mit dem Band (t) in Eingriff steht.

15. Ballenpresse nach Anspruch 14, dadurch gekennzeichnet, daß der erste Satz von Scheiben (106) in Querrichtung gegenüber dem zweiten Satz von Scheiben versetzt ist, und daß die Umfangskanten einander überlappen, um einen Preßspalt zwischen diesen zu bilden.

16. Ballenpresse nach Anspruch 15, dadurch gekennzeichnet, daß die Anpreßeinrichtungen (112-117) folgendes umfassen:
eine Querwelle (113), die in der Nähe des Preßspaltes zwischen dem ersten und zweiten Satz von Scheiben (106) angeordnet ist,
ein Rad (112), das auf der Querwelle (113) drehbar gelagert ist, und
elastische Einrichtungen (117), die die Welle (113) gegen den Preßspalt drücken, um das Rad (112) mit dem Band (t) in Eingriff zu bringen.

17. Ballenpresse nach Anspruch 16, dadurch gekennzeichnet, daß das Rad (112) in Querrichtung benachbart zu dem Abstand zwischen zwei benachbarten, Seite an Seite angeordneten Scheiben in dem zweiten Satz von Scheiben angeordnet ist.

18. Ballenpresse nach einem der Ansprüche 14-17, dadurch gekennzeichnet, daß die Scheiben (106) in dem ersten Satz für eine gemeinsame Drehung befestigt sind und die Scheiben in dem zweiten Satz ebenfalls für eine gemeinsame Drehung befestigt sind, wodurch sich die Umfangskanten der Scheiben zusammen bewegen.

19. Ballenpresse nach Anspruch 18, dadurch gekennzeichnet, daß die zweite Scheibenbaugruppe (110) weiterhin eine zweite Freilaufkupplung (111) umfaßt, die auf der Welle koaxial zu dem zweiten Satz mit Abstand voneinander Seite an Seite angeordneten Scheiben befestigt ist, wodurch sich die zweite Scheibenbaugruppe (110) frei in einer Richtung bewegen kann, die eine Bewegung des Bandes (t) entlang der Zuführungsbahn (p) in der einen Richtung fördert.

20. Ballenpresse nach Anspruch 19, dadurch gekennzeichnet, daß die Antriebseinrichtung (121) die zweite Scheibenbaugruppe (110) mit einer Drehgeschwindigkeit dreht, die mehr als 20% größer als die Drehgeschwindigkeit der angetriebenen Scheibenbaugruppe (105) ist.

21. Ballenpresse nach einem der Ansprüche 12-20, dadurch gekennzeichnet, daß die Oberflächengeschwindigkeit des Packens aus Erntematerial, die durch die Ballenformungseinrichtung (24, 25) hervorgerufen wird, schneller als die Geschwindigkeit ist, mit der die Antriebseinrichtungen (121) das Band (t) in die Ballenformungskammer einspeisen.

22. Verfahren zur Formung eines zylindrischen Ballens (B) aus Erntematerial mit einem allgemein runden Querschnitt, wobei das Verfahren die folgenden Schritte umfaßt:
- Aufnehmen von Erntematerial,
- Zuführen des aufgenommenen Erntematerials in eine Ballenformungskammer, die zumindest teilweise durch eine Ballenformungseinrichtung (24, 45) umgrenzt ist,
- Formen des Erntematerials in der Ballenformungskammer zu einem zylindrischen Packen mit einem allgemein runden Querschnitt, und
- Umwickeln des zylindrischen Packens aus Erntematerial mit einer Vielzahl von mit Abstand voneinander angeordneten Streifen eines selbsthaftenden Bandes (t) von einer Bandabgabebaugruppe (56), die eine Vielzahl von Bandabgabeeinrichtungen (90-94) umfaßt, entlang einer Vielzahl von getrennten Bahnen um den Außenumfang des zylindrischen Packens, um den Packen zu umgreifen und einen stabilen Ballen (B) zu bilden,
dadurch gekennzeichnet, daß der Umwicklungsschritt den Teilschritt der:
Bewegung der Bandabgabebaugruppe (56) von einer Ruhestellung auf eine Betriebsstellung (81) umfaßt, bei der die Bandabgabebaugruppe (56) die Länge des Abschnittes der Bahn des Bandes (t) verringert, der sich zwischen den Abgabeeinrichtungen (90-94) und dem Umfang des zylindrischen Packens erstreckt.

23. Verfahren nach Anspruch 22, dadurch gekennzeichnet, daß der Umwicklungsschritt den Teilschritt der:
- Drehung des zylindrischen Packens aus Erntematerial um seine Achse durch die Ballenformungseinrichtungen (24, 25) umfaßt.

24. Verfahren nach Anspruch 23, dadurch gekennzeichnet, daß der Umwicklungsschritt den weiteren Teilschritt der:
- Schaffung eines Abstandes zwischen zwei anfänglich benachbarten Ballenformungseinrichtungen (24, 25) umfaßt, um die Zuführung der Streifen aus Band (t) durch diesen Abstand hindurch zu ermöglichen.

25. Verfahren nach Anspruch 23 oder 24, dadurch gekennzeichnet, daß der Umwicklungsschritt im weiteren Teilschritt der:
- Zuführung der Streifen des Bandes (t) an den Außenumfang der rotierenden zylindrischen Packung umfaßt.

26. Verfahren nach Anspruch 25, dadurch gekennzeichnet, daß der Zuführungs-Teilschritt mit einer anfänglichen Streifenzuführungsgeschwindigkeit durchgeführt wird, die kleiner als die Geschwindigkeit des Außenumfanges ist.

27. Verfahren nach einem der Ansprüche 22-26, dadurch gekennzeichnet, daß der Umwicklungsschritt den Teilschritt der:
- Abgabe einer Vielzahl von mit Abstand voneinander angeordneten Streifen aus selbsthaftendem Band (t) entlang allgemein parelleler Bahnen um den Außenumfang des zylindrischen Packens umfaßt.

28. Verfahren nach Anspruch 27, dadurch gekennzeichnet, daß der Abgabe-Teilschritt durch gleichzeitiges Abgeben der Vielzahl von Streifen aus selbsthaftendem Band (t) entlang der allgemein parallelen Bahnen durchgeführt wird.

29. Verfahren nach einem der Ansprüche 22-28, dadurch gekennzeichnet, daß der Umwicklungsschritt den Teilschritt der:
- Zuführung der Streifen des Bandes (t) entlang einzelner Bahnen umfaßt, die den Packen umgeben, worauf jedes der Bänder (t) sich selbst überlappt und an sich selbst anhaftet.

30. Verfahren nach Anspruch 29, dadurch gekennzeichnet, daß der Umwicklungsschritt den weiteren Teilschritt der:
- Durchtrennung der Streifen aus selbsthaftendem Band (t) umfaßt, wenn die Menge an abgegebenem Band den Umfang des zylindrischen Packens aus Erntematerial übersteigt.

31. Verfahren nach Anspruch 30, dadurch gekennzeichnet, daß der Abtrenn-Teilschritt durch gleichzeitiges Durchtrennen der Streifen aus selbsthaftendem Band (t) durchgeführt wird.

32. Ballen (B) der einen Packen aus faserförmigem Erntematerial mit einem im wesentlichen zylindrischen Umfang umfaßt, dadurch gekennzeichnet, daß eine Vielzahl von Streifen aus selbsthaftendem Band (t) entlang getrennter Bahnen um den Umfang herum gewickelt ist.

33. Ballen (B) nach Anspruch 32, dadurch gekennzeichnet, daß die getrennten Bahnen im wesentlichen parallel zueinander sind, und in getrennten Ebenen liegen, die im wesentlichen senkrecht zur Achse des Ballens (B) stehen, derart, daß jeder Streifen aus Band (T) nach dem Umgreifen des gesamten Umfanges des Außenbereiches an sich selbst anhaftet.

## Revendications

1. Botteleuse destinée à former des bottes cylindriques de matériau de récolte, ladite botteleuse (10) comprenant:
des moyens de bottelage (24, 45) s'associant mutuellement pour définir une chambre de bottelage;
des moyens (15, 25, 30) d'alimentation du matériau de récolte dans ladite chambre de bottelage pour former une balle cylindrique de matériau de récolte; et
des moyens d'emballage (54) de bottes pour emballer ladite balle cylindrique de matériau de récolte pour former une botte (B), lesdits moyens d'emballage (54) de bottes comprenant un dispositif d'alimentation de ruban (55) et un dispositif de distribution de ruban (56);
ledit dispositif d'alimentation de ruban (55)comprenant plusieurs rouleaux (73) de ruban (t); et
ledit dispositif de distribution de ruban (56) comprenant un nombre égal de distributeurs de ruban (90-94) disposés pour distribuer plusieurs bandes espacées de ruban (t) à partir desdits rouleaux (73) dans ladite chambre de bottelage, le long de plusieurs trajectoires séparées et prédéterminées autour de la périphérie de ladite balle cylindrique de matériau de récolte pour former une botte stable (B).
La botteleuse se caractérise par le fait qu'elle comprend en outre:
des moyens de montage (75-80) pour monter ledit dispositif de distribution de ruban (56) dans une position de repos; et
des moyens (83-85) pour déplacer ledit dispositif de distribution (56) de ladite position de repos vers une position opérationnelle (81) à laquelle ledit dispositif de distribution (56) réduit la longueur de la portion de ladite trajectoire du ruban (t), entre lesdits distributeurs (90-94) et la périphérie de ladite balle cylindrique.

2. Botteleuse selon la revendication 1, dans laquelle:
lesdits moyens de bottelage (24, 45) comprennent un moyen inférieur (24) de bottelage et un moyen supérieur (45) de bottelage;
et comprenant en outre:
un châssis principal (11) sur lequel est monté ledit moyen inférieur (24) de bottelage;
un capot arrière (13) monté avec pivotement sur ledit châssis principal, ledit moyen supérieur (45) de bottelage étant monté partiellement sur ledit châssis principal (11) et partiellement sur ledit capot arrière (13); et
un moyen (23) de déplacement dudit capot arrière (13) pour fournir un espace entre ledit châssis (11) et ledit capot arrière (13),
caractérisée en ce que ledit ruban (t) est débité au départ desdits distributeurs (90-94) au travers dudit espace entre ledit châssis (11) et ledit capot arrière (13).

3. Botteleuse selon la revendication 2, caractérisée en ce que ledit espace est limité par ledit moyen inférieur (24) de bottelage et ledit moyen supérieur (45) de bottelage.

4. Botteleuse selon la revendication 2 or 3, caractérisée en ce que ledit mécanisme d'emballage de botte (54) est monté sur ledit capot arrière (13).

5. Botteleuse selon l'une quelconque des revendications précédentes, caractérisée en ce que chacun desdits distributeurs de ruban (90-94) reçoit du ruban (t) d'un desdits rouleaux particuliers (73) de ruban (t).

6. Botteleuse selon l'une quelconque des revendications précédentes, caractérisée en ce que ledit ruban (t) est autoadhésif.

7. Botteleuse selon la revendication 6, caractérisée en ce que l'une des faces dudit ruban (t) est recouverte d'un moyen adhésif, et que ledit ruban (t) est fourni au départ desdits distributeurs (90-94) avec ladite face généralement parallèle à la périphérie de ladite balle cylindrique.

8. Botteleuse selon la revendication 7, caractérisée en ce que lesdites trajectoires séparées et prédéterminées autour de la périphérie de ladite balle cylindrique sont substantiellement parallèles entre elles et se trouvent dans des plans séparés, perpendiculaires à l'axe de la balle cylindrique, ce qui permet audit ruban (t) d'adhérer à lui-même après avoir entouré toute la circonférence de ladite balle cylindrique.

9. Botteleuse selon l'une quelconque des revendications précédentes, caractérisée en ce que ledit dispositif de distribution de ruban (56) comporte une série de distributeurs de ruban équidistants (90-94) pour débiter plusieurs bandes de ruban (t) le long d'une pluralité de trajectoires équidistantes autour de ladite balle cylindrique de matériau de récolte.

10. Botteleuse selon l'une quelconque des revendications précédentes, caractérisée en ce que ledit mécanisme d'emballage (54) comporte en outre un moyen de coupe (86) pour sectionner simultanément plusieurs bandes de ruban (t) après avoir été débité autour de plus d'une section transversale complète de ladite périphérie de ladite balle cylindrique.

11. Botteleuse selon la revendication 10, caractérisée en ce que lesdits moyens (83-85) de déplacement desdits moyens de montage (75-80) déplacent également ledit dispositif de distribution (56) de ladite position opérationnelle (81) vers une position de coupe (82) à laquelle lesdits rubans (t) entrent en contact avec ledit moyen de coupe (86) pour sectionner lesdits rubans (t).

12. Botteleuse selon l'une quelconque des revendications précédentes, caractérisée en ce que lesdits distributeurs de ruban (90-94) comprennent:
un arbre d'entraînement (107);
un dispositif (105) de disques entraînés, monté coaxialement pour tourner avec ledit arbre d'entraînement (107) et comprenant un premier jeu de disques espacés (106), disposés côte à côte et possédant des parties d'arêtes périphériques extérieures;
des moyens (112-117) de contrainte dudit ruban (t) contre les parties d'arêtes périphériques extérieures dudit premier jeu de disques (106); et
un moyen d'entraînement (121) pour faire tourner ledit arbre d'entraînement (107) afin d'alimenter ledit ruban (t) entre lesdits moyens de contrainte (112-117) et les parties d'arêtes périphériques extérieures dudit premier jeu de disques (106), de telle sorte que ledit ruban (t) est distribué à partir dudit dispositif de distribution (56).

13. Botteleuse selon la revendication 12, caractérisée en ce que ledit dispositif (105) de disques entraînés comprend en outre un embrayage à sens unique (108) monté fonctionnellement sur ledit arbre d'entraînement (107), de telle sorte que ledit dispositif (105) de disques entraînés est entraîné par ledit arbre (107) pour déplacer le ruban (t) dans un seul sens.

14. Botteleuse selon la revendication 12 ou 13, caractérisée en ce que: lesdits distributeurs de ruban (90-94) comprennent en outre un second dispositif de disques (110) monté avec rotation sur un second arbre parallèle audit arbre d'entraînement (107), ledit second dispositif de disques (110) comprenant un second jeu de disques espacés, disposés côte à côte, et possédant des parties d'arêtes périphériques extérieures;
lesdits moyens de contrainte (112, 117) contraignent également ledit ruban (t) contre les arêtes périphériques extérieures dudit second jeu de disques; et
ledit premier jeu de disques entraînés (106) déplace ledit ruban le long d'une trajectoire d'alimentation (p), correspondant de manière générale à la partie de la circonférence des disques (106) en contact avec ledit ruban (t).

15. Botteleuse selon la revendication 14, caractérisée en ce que ledit premier jeu de disques (106) est décalé transversalement par rapport audit second jeu de disques, et que lesdites arêtes périphériques se chevauchent pour produire un étranglement entre eux.

16. Botteleuse selon la revendication 15, caractérisée en ce que lesdits moyens de contrainte (112-117) comprennent:
un arbre transversal (113) disposé à proximité dudit étranglement entre les premier et second jeux de disques (106);
un galet (112) pouvant tourner sur ledit axe transversal (113); et
un moyen élastique (117) contraignant ledit arbre (113) dans la direction dudit étranglement afin que ledit galet (112) entre en contact avec ledit ruban (t).

17. Botteleuse selon la revendication 16, caractérisée en ce que ledit galet (112) est disposé transversalement à côté de l'espace entre deux disques voisins disposés côte à côte, dans ledit second jeu de disques.

18. Botteleuse selon l'une quelconque des revendications 14 à 17, caractérisée en ce que lesdits disques (106) dudit premier jeu sont solidarisés pour tourner en commun, et lesdits disques du second jeu sont également solidarisés pour tourner en commun, de telle sorte que lesdites arêtes périphériques desdits disques se déplacent ensemble.

19. Botteleuse selon la revendication 18, caractérisée en ce que le second dispositif de disques (110) comporte en outre un second embrayage à sens unique (111) monté coaxialement sur ledit axe avec ledit second jeu de disques espacés, disposés côte à côte, de telle sorte que le second dispositif de disques (110) est libre de tourner dans un sens ce qui provoque ainsi le déplacement dudit ruban (t) le long de ladite trajectoire d'alimentation (p) dans ledit un seul sens.

20. Botteleuse selon la revendication 19, caractérisée en ce que le moyen d'entraînement (121) fait tourner ledit second dispositif de disques (110) à une vitesse de rotation supérieure de plus de 20 % par rapport à la vitesse rotation du dispositif (105) de disques entraînés.

21. Botteleuse selon l'une quelconque des revendications 12 à 20, caractérisée en ce que la vitesse superficielle de la balle de matériau de récolte, produite par les moyens de bottelage (24, 25), est supérieure à la vitesse à laquelle ledit moyen d'entraînement (121) alimente ledit ruban (t) dans ladite chambre de bottelage.

22. Méthode pour former une botte cylindrique (B) de matériau de récolte possédant une section transversale généralement ronde, ladite méthode comprenant les phases:
- de ramassage de matériau de récolte;
- d'alimentation dudit matériau de récolte ramassé dans une chambre de bottelage, au moins partiellement définie par des moyens de bottelage (24, 45);
- de formation dudit matériau de récolte dans ladite chambre de bottelage en une balle cylindrique possédant une section transversale généralement ronde; et
- d'emballage de ladite balle cylindrique de matériau de récolte avec plusieurs bandes espacées de ruban autoadhésif (t) à partir d'un dispositif de distribution de ruban (56), comportant plusieurs distributeurs de ruban (90-94), le long de plusieurs trajectoires séparées autour de sa périphérie extérieure pour ceindre ladite balle et former une botte stable (B);
caractérisée en ce que ladite étape d'emballage comprend l'étape secondaire de:
déplacement dudit dispositif de distribution de ruban (56) d'une position de repos (81) vers une position opérationnelle (81) à laquelle ledit dispositif de distribution de ruban (56) réduit la longueur de la section de ladite trajectoire du ruban (t) s'étendant entre lesdits distributeurs (90-94) et la périphérie de ladite balle cylindrique.

23. Méthode selon la revendication 22, caractérisée en ce que ladite étape d'emballage comprend l'étape secondaire de:
- rotation de ladite balle cylindrique de matériau de récolte sur son axe par lesdits moyens de bottelage (24, 45).

24. Méthode selon la revendication 23, caractérisée en ce que ladite étape d'emballage comporte en outre l'étape secondaire de:
- prévision d'un espace entre une paire de moyens de bottelage initialement adjacents (24, 25) pour permettre l'alimentation desdites bandes de ruban (t) entre eux.

25. Méthode selon la revendication 23 ou 24, caractérisée en ce que ladite étape comporte en outre l'étape secondaire:
- d'alimentation desdites bandes de ruban (t) vers ladite périphérie extérieure de ladite balle cylindrique en rotation.

26. Méthode selon la revendication 25, caractérisée en ce que ladite étape secondaire d'alimentation est réalisée à une vitesse initiale d'alimentation de ruban inférieure à la vitesse de ladite périphérie extérieure.

27. Méthode selon l'une quelconque des revendications 22 à 26, caractérisée en ce que ladite étape d'emballage comprend l'étape secondaire de:
- distribution de plusieurs bandes espacées de ruban (t) autoadhésif le long de trajectoires généralement parallèles autour de la périphérie extérieure de ladite balle cylindrique.

28. Méthode selon la revendication 27, caractérisée en ce que ladite étape secondaire de distribution est exécutée en distribuant simultanément lesdites plusieurs bandes de ruban (t) le long desdites trajectoires généralement parallèles.

29. Méthode conformément à l'une des revendications 22 à 28, caractérisée en ce que ladite étape d'emballage comprend l'étape secondaire:
- d'alimentation desdites bandes de ruban (t) le long des trajectoires individuelles, entourant ladite balle sur laquelle tous lesdits rubans (t) se chevauchent et adhèrent entre eux.

30. Méthode selon la revendication 29, caractérisée en ce que ladite étape d'emballage comporte l'étape secondaire suivante de:
- sectionnement desdites bandes de ruban (t) lorsque la quantité de ruban distribué excède la circonférence de ladite balle cylindrique de matériau de récolte.

31. Méthode selon la revendication 30, caractérisée en ce que ladite étape secondaire de sectionnement est exécutée en coupant simultanément lesdites bandes de ruban autoadhésif (t).

32. Botte (B), comprenant une balle de matériau de récolte fibreux avec une périphérie substantiellement cylindrique, caractérisé en ce que plusieurs bandes de ruban autoadhésif (t) sont enroulées le long des trajectoires séparées autour de ladite périphérie.

33. Botte (B) selon la revendication 32, caractérisé en ce que lesdites trajectoires séparées sont substantiellement parallèles entre elles et se situent dans des plans séparés, substantiellement perpendiculaires à l'axe de la botte (B), de sorte que chaque bande de ruban (t), après avoir entouré l'ensemble de la circonférence de ladite périphérie, adhère à elle-même.
